# EUROPEAN PATENT SPECIFICATION

(11) **EP 1 667 003 B1**
(45) Date of publication and mention of the grant of the patent: **16.08.2017**
(21) Application number: 05077671.5
(22) Date of filing: 29.11.2005
(51) Int. Cl.: G05D 23/02

(54) **Thermostatic regulator system**
Thermostatisches Reglersystem
Système de régulateur thermostatique

(30) Priority: 01.12.2004 SE 0402929
(43) Date of publication of application: 07.06.2006
(73) Proprietor: AB Markaryds Metallarmatur, 285 32 Markaryd (SE)
(72) Inventor: Carlsson, Leif, 341 31 Ljungby (SE)
(74) Representative: Bergenstråhle Group AB

(56) References cited:
- DE-A1- 10 303 828
- DE-C1- 10 050 207
- DE-U1- 29 817 923
- FR-A1- 2 297 371
- US-A- 4 216 902

## Description

### TECHNICAL FIELD

The present invention relates to a thermostatic regulator system for a radiator, comprising a valve with a valve spindle which supports a valve cone, a regulator comprising a housing and a thermostatic sensor body with an operating device movable in response to the temperature, and means for absorbing an excess movement of the operating device in addition to the movement to the closed position of the valve, the operating device being connected to the valve spindle for transferring a movement in its longitudinal direction, **wherein the connection between the valve spindle and the operating device is rigid in their longitudinal directions.**

### BACKGROUND ART

Radiators for water-borne heating are very common and have been in existence for many years. The methods of heating the water circulating in the piping can naturally vary, but a feature common to those systems that have been in existence down the years is in general that the volume of water which moves through the radiator per unit of time can be regulated. By such means, different temperatures may be obtained in different rooms, even though the temperature of the circulating water is substantially the same.

Initially, the regulation of the temperature was put into effect manually, a knob or thumbwheel being used to set the valve in a number of more or less open positions in addition to the completely shut or completely open positions. In the event of excessively low temperatures, the valve was gradually opened, while the valve was closed when the temperature was felt as being sufficient or too high.

This method of regulating the temperature in a room is somewhat circumstantial and not particularly efficient. It has been possible to achieve more efficient regulation of the temperature by making the regulators thermostatic so that they automatically open the valve if the temperature is lower than the preset level, and once again closes the valve when the desired temperature has been reached and keeps it shut if this temperature is exceeded.

One very common type of thermostat consists of a sensor body which contains a wax that expands when the temperature rises. Since the wax is enclosed in a tight casing, it does not leak, but its expansi0on is instead used for realising a movement in an actuator or operating device which in turn acts on the valve of the radiator. If the temperature exceeds the preset level, the wax will nevertheless continue to expand. This movement is transmitted to the operating device and in principle there is then a risk that the valve be damaged if it is compressed too hard once it has reached its closed position.

In order to prevent damage to the valve, means have therefore been provided to take up any possible movement of the operating device after the valve has reached its closed position. In such instance, the operating device is not in direct contact with the parts of the valve. Instead, the operating device is disposed inside a sleeve and is in contact with the sleeve via a spring which is disposed inside the sleeve. Hence, the operating device is in contact with the spring which in turn is in contact with the sleeve. The spring is quite difficult to compress, in other words it has rather high spring stiffness constant. This will have as a consequence that the unit consisting of the operating device, inner spring and casing acts as a rigid unit on movements up to the closed position of the valve. Only when the sleeve is in contact with its outside against the valve spindle which no longer moves towards the closed position of the valve will the forces that compress the spring be sufficiently great so that a tangible compression takes place. Thus, excess movement by the operating device will be absorbed in the spring. When the thermostatic sensor body subsequently cools, the wax will contact and the operating device will move back under the action of the spring. Only when the temperature approaches the preset temperature level will the spring once again be totally taut. This arrangement functions in order to protect the parts of the valve, but a major drawback is that this solution requires considerable space. In certain contexts, this is a drawback from the purely construction engineering point of view, since it might be difficult to provide room for the regulator system close to a wall in a corner or the like, but in other contexts it is the aesthetic disadvantages that are the most manifest.

In this context, attention should also be paid to those problems that a shorter construction length may involve. The closer to the radiator that the thermostatic sensor body is placed, the greater will be the risk that it is directly affected by thermal radiation from the radiator proper. This in turn may result in the ambient air in the room not being heated to the set temperature level, since the valve shuts off far too early, or that the valve is forced to carry out an excessive number of rapid switches, which, among other things entails considerable variation in the temperature in the room and wear on the component parts of the valve.

DE 10050207 **discloses a valve for heating systems. A return spring pretensions the valve organ towards an open position. At excess temperatures, the force acting on the valve is limited by a spring which is coaxial with the return spring. Also the rod which carries the valve organ is movable in relation to the valve organ.**

US4216902 **discloses a thermostatic valve with a temperature sensor, which acts on a valve mechanism to regulate the flow through the valve. A heat shield is arranged to limit the effects of the heat from the radiator on the valve. A spring is arranged to limit excess forces on the valve due to high temperatures.**

DE10303828 **discloses a thermostatic valve with two thermostatic elements reacting at different temperatures. A spring limiting excess forces is shared by the two elements.**

FR2297371 **discloses a thermostatic valve for radiators with a return spring and a protective spring for protecting the valve element at high temperatures.**

DE29817923 **discloses a valve with a thermostatic section and a valve section. A membrane whereon the valve element is pressing acts as a return spring.**

### PROBLEM STRUCTURE

The task forming the basis of the present invention is thus to realise a thermostatic regulator system of superior function, but displaying smaller outer dimensions than is the case in the prior art solutions. At the same time, the problems relating to shorter construction lengths will be reduced or wholly obviated.

### SOLUTION

The objects forming the basis of the present invention will be attained if the regulator system intimated by way of introduction is characterised in that **said means for absorbing an excess movement entails that the operating device and the valve spindle are movable to a position beyond the position that corresponds to the closed position of the valve, wherein the valve cone is movable past its closed position.**

Further advantages will be attained if the regulator system is moreover given one or more of the characterising features as set forth in appended Claims 2 to 5.

### BRIEF DESCRIPTION OF THE ACCOMPANYING DRAWINGS

The present invention will now be described in greater detail hereinbelow with reference to the accompanying Drawings. In the accompanying Drawings:
- Fig. 1: is a section through the regulator system according to the present invention, where the valve is in an open position;
- Fig. 2: is a view according to Fig. 1 where the valve is in a closed position;
- Fig. 3: is a view according to Figs. 1 and 2, but where the valve is located in a position beyond the closed position; and
- Fig. 4: is a section through the regulator system in different regulation position than in Figs. 1 to 3, where the valve is located in a position corresponding to that of Fig. 3.

### DESCRIPTION OF PREFERRED EMBODIMENT

In the accompanying Drawings, the regulator system 1 according to the present invention is shown in varying valve positions and adjustment positions. The regulator system 1 comprises, on the one hand, a regulator 2 and a valve device 3. The valve device 3 is in turn disposed in or in association with a radiator for water-borne heat. The regulator 2 comprises a housing 4 with a thermostatic sensor body 5. The housing 4 has, on the one hand, an outer hood 6 and, on the other hand, an inner hood 7. The outer hood 6 is connected to the inner hood 7 via a thread 8. The outer hood 6 is, when the regulator system is finally mounted in position on the radiator, the only outer part which is movable and is most generally designated a knob or thumbwheel.

An operating device 9 is disposed adjacent the thermostatic sensor body 5 for transmitting a movement to the operating device when the sensor body 5 is heated. The operating device 9 is connected to a calibration disc 10 which in turn is threaded to an additional calibration disc 11. The two calibration discs 10 and 11 may be set by rotation in relation to one another, so that a given temperature of the thermostatic sensor body 5 implies a given position of the outside of the calibration disc 11 which in turn is intended to abut against a pin 12 included in the valve, the pin in turn acting on the valve 3.

The valve 3 is provided with the pin 12 extending out from the valve 3 and connected to a valve spindle 13. A return spring is disposed around the valve spindle 13 for returning the valve 3 to its open position when it is no longer affected by a force from the regulator 3. It is thus the return spring 14 which ensures that the pin 12 maintains its contact with the outside of the calibration disc 11 when the thermostatic sensor body cools.

A valve cone 15 is disposed at the free end of the valve spindle 13. In its turn, the valve cone 15 supports a sealing ring 16 which, in the preferred embodiment, consists of that part of the valve cone 15 which has the largest diameter. Thus, the sealing ring 16 projects out at least a short distance outside the rest of the valve cone 15. Finally, the valve device 3 includes an inner bore 17 which the valve cone 15 with the sealing ring 16 is intended to seal when the valve 3 is shut.

The outer hood 6 has inner engagement members 18 for engagement with the thermostatic sensor body 5. This entails that if the outer hood or the thumbwheel 6 is twisted in relation to the inner hood 7 by the intermediary of the thread 8, the outer hood 6 will move away from the valve 3 and, in such instance, entrain with it a distance the thermostatic sensor body 5 and the operating device 9.The position of the sensor body 5 in relation to the inner hood 7 will thus be displaced in relation to the earlier position. A corresponding inward movement of the outer hood 6 and the thermostatic sensor body 5 will be realised if the outer hood 6 is screwed inwards on the inner hood 7 by the intermediary of the thread 8. By such means, it will be realised that the valve 3 is opened or shut at different predetermined temperatures, even if the thermostatic sensor body 5 is constantly the same and reacts in one and the same manner in response to the ambient temperature.

In order to ensure completely that the regulator 2 opens and shuts the valve 3 at predetermined temperatures which correspond to distinct adjustment positions of the outer hood 6 in relation to the inner hood 7, the calibration discs 10 and 11 are disposed in contract with the operating device 9. The distance between the calibration discs 10 and 11 is variable by the intermediary of a thread 19 in order to achieve precision in those temperatures at which the valve 3 may open and close respectively.

The connection between the operating device 9 of the thermostatic sensor body 5 and the pin 12 which is included in the valve and which in turn is connected to the valve spindle 13 is completely rigid in the longitudinal direction during use. This implies in other words that the spring that was previously disposed in regulators for taking up excess movements has been dispensed with and the housing 4 may therefore be made considerably shorter than would otherwise have been possible. Thus, the regulator 2 will be less bulky, which is generally perceived as being aesthetically more appealing and which also affords the advantage that use of the regulator system 1 in cramped spaces is also made possible.

Since a simple omission of the spring that had previously been employed for accommodating excess movements in the operating device 9 would entail a risk of damaging the valve according to prior art technology, the excess movement must be taken up by other means.

The valve device 3 included in the present invention will thus now be described in greater detail. The pin 12 and the valve spindle 13 fixedly connected thereto are of a conventional design and will move in the longitudinal direction under the action of the operating device 9 for closing the valve. When the ambient temperature falls, the operating device 9 moves in a direction away from the valve 3 and the return spring 14 ensures that the pin 12 and the valve spindle 13 accompany this movement and that the connection between the operating device 9 and the interjacent calibration discs 10 and 11 is maintained.

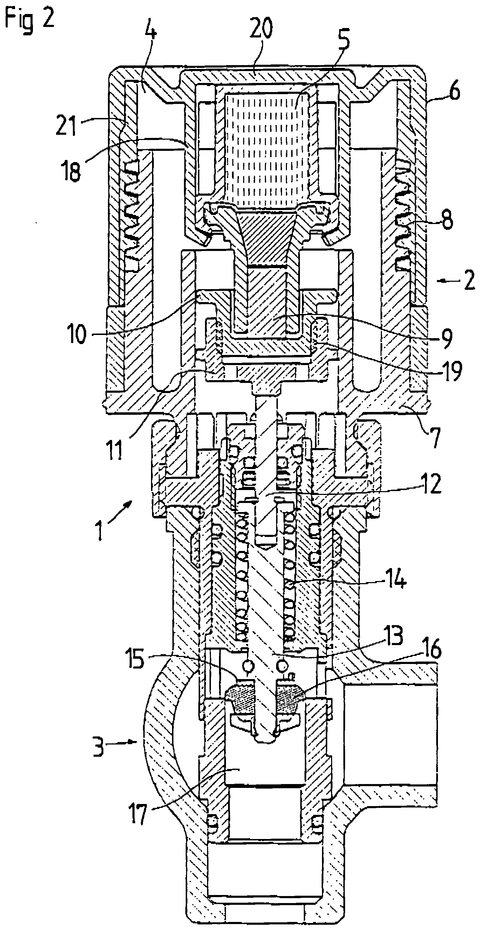

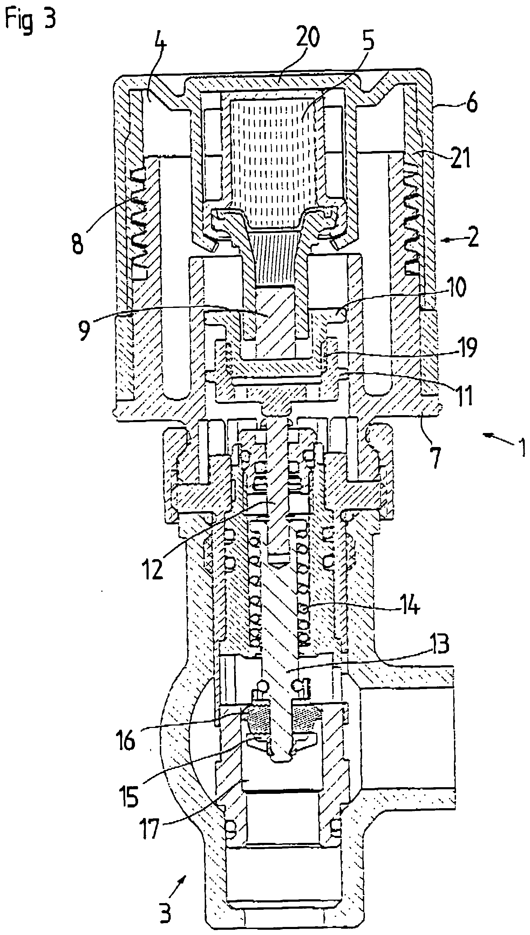

On the other hand, the valve cone 15 is particularly adapted for use together with the regulator 2 according to the invention. The valve cone 15 and its sealing ring 16 are essentially for this porpoise. The fit between the sealing ring 16 and the inner bore 17 in the valve 3 is very close. When the sealing ring 16 bottoms against the end of the inner bore 17, a seal will be established and the valve will thereby be shut, as shown in Fig. 2. Even through the seal is tight, it is still possible to move the valve cone 15 and the sealing ring 16 further into the inner bore 17. This state is illustrated in Fig. 3. Since the valve cone 15 is reciprocal inside the bore 17, at the same time as a sealing takes place, the valve has not only one closed position, but instead a longer zone in which all positions are closed positions.

It is thus possible for the valve cone 15 to take up the excess movement which is realised on heating of the thermostatic sensor body 5 above that temperature at which a first closed position is reached. At the same time, the advantage will also be afforded that the sealing ring 16, with its close abutment against the inside of the inner bore 17, will clean the bore on its reciprocal movement in the inner bore 17. Thus, the regulator 2 according to the present invention must cooperate with a mating valve device 3 according to the invention. However, the valve device 3 according to the present invention may cooperate with conventional prior art regulator devices, even if its potential is then not utilised to the full. Otherwise, the regulator system 1 includes conventional components for integration and also conventional sealing means.

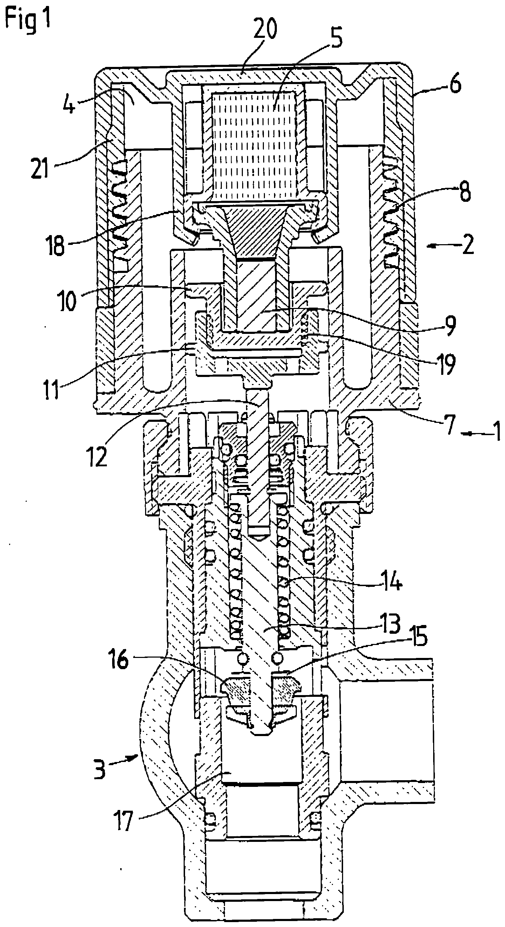

The function of the regulator system 1 is thus apparent from Figs. 1 and 3. In Fig. 1, the desired temperature is set in that the outer hood 6 has been set in a given position in relation to the inner hood 7, by rotation. In this instance, the valve 3 is open until the set temperature has been reached. The sensor body 5 is heated by the ambient air which in turn is heated by the radiator. The wax in the thermostatic sensor body 5 expands and the operating device 9 will move in a direction towards the valve and, via the calibration discs 10 and 11, act on the pin 12 and thereby also activate the valve spindle 13 until such time as the position illustrated in Fig. 2 has been reached.

In this position, the valve 3 is shut since the desired temperature has been reached. If heating continues, for example in that the now heated radiator continues to heat the ambient air further, or because of other sources of heat such as solar radiation, other radiators, a stove, wax candles or human body heat in the room, the valve cone 15 will, under the action of the operating device 9, move a further distance inwards inside the bore 17, as shown in Fig. 3.

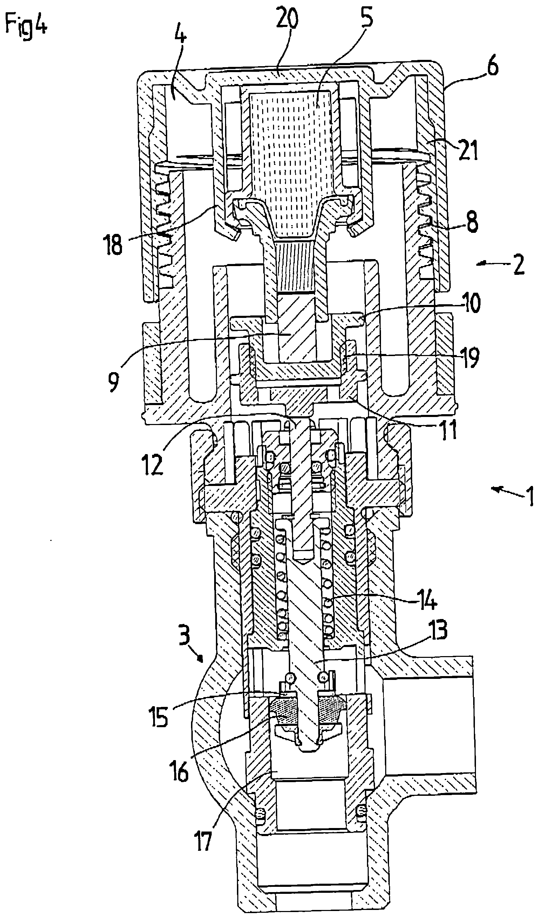

In Fig. 4, the regulator 2 has been given another setting and its function is similar to that described above, but is carried out in a different temperature range. The first closed position is thus reached at a different temperature than that which prevails in Fig. 2. By modifying the setting of the regulator 2, the valve cone 15 may even be intentionally caused to move in the zone of the closed positions and an intentional cleaning of the inner bore 17 will then take place.

Since the regulator 2 has been made shorter than is usual in prior art systems, problems might possibly occur in that the thermostatic sensor body 5 is placed more proximal the radiator than previously. There is then a risk that the thermostatic sensor body 5 is affected too much by radiation heat from the radiator without the rest of the room being heated to a corresponding level. The valve 3 then assumes its closed position even though the desired temperature has not been reached at other places in the room other than at the thermostatic sensor body 5. This may be counteracted by a suitable choice of material in the housing 4. For example, certain areas of the housing may be manufactured from a screening or insulating material and under any circumstances a material that does not conduct heat from the radiator or the associated piping. Possibly, only certain parts of the housing 4 need to be manufactured from such material. Other parts of the housing 4 are advantageously manufactured so that heat from other parts of the room may readily affect the thermostatic sensor body 5.

In the preferred embodiment, the inner hood 7 and the calibration discs 10 and 11 are preferable manufactured from a plastic material which is non-conductive and insulating for the heat from the radiator. Heat from the radiator, regardless of whether this is by radiation or conduction through the operating device 9, should only reach the thermostatic sensor body 5 to a limited degree.

However, it is desirable that the thermostatic sensor body 5 be permitted to sense the temperature of the ambient air to as high a level as possible without being affected by the radiator on which it is mounted. Consequently, the end surface 20 of the outer hood 6 is advantageously manufactured from a thermally conductive material, such as metal, so that external heat may be conducted to the thermostatic sensor body 5. The metal extends a distance outside the circumferential surface of the outer hood 6, but, in the preferred embodiment, an insulating layer 21, for example of plastic, is disposed on its inside. Thus, the outer hood 6 is manufactured from at least two different materials.

The present invention may be modified further without departing from the scope of the appended Claims.

## Claims

1. A thermostatic regulator system (1) for a radiator, comprising a valve (3) with a valve spindle (13) which supports a valve cone (15), a regulator (2) comprising a housing (4) and a thermostatic sensor body (5) with an operating device (9) movable in response to the temperature, and means for absorbing an excess movement of the operating device (9) in addition to the movement to the closed position of the valve (3), the operating device (9) being connected to the valve spindle (13) for transferring a movement in its longitudinal direction, wherein the connection between the valve spindle (13) and the operating device (9) is rigid in their longitudinal directions, **characterised in that** said means for absorbing an excess movement entails that the operating device (9) and the valve spindle (13) are movable to a position beyond the position that corresponds to the closed position of the valve (3), wherein the valve cone (15) is movable past its closed position..

2. The thermostatic regulator system (1) as claimed in Claim 1, **characterised in that** the housing (4) is at least partly manufactured from a material of low thermal conductivity, in order to counteract thermal conduction from the radiator to the sensor body (5).

3. The thermostatic regulator system (1) as claimed in Claim 1 or 2 **characterised in that** the housing (4) is partly manufactured from a material of superior thermal conductivity for conducting the ambient heat to the thermostatic sensor body (5).

4. The thermostatic regulator system (1) as claimed in any of Claims 1 to 3, **characterised in that** an outer hood (6) of the housing (4) is manufactured from at least two different materials.

## Patentansprüche

1. Thermostatisches Reglersystem (1) für einen Kühler, das ein Ventil (3) mit einer Ventilspindel (13), die einen Ventilkegel (15) stützt, einen Regler (2), der ein Gehäuse (4) und einen thermostatischen Sensorkörper (5) mit einer Betätigungsvorrichtung (9), die als Reaktion auf die Temperatur beweglich ist, umfasst, und Mittel zum Absorbieren einer übermäßigen Bewegung der Betätigungsvorrichtung (9) zusätzlich zur Bewegung in die geschlossene Stellung des Ventils (3) umfasst, wobei die Betätigungsvorrichtung (9) zur Übertragung einer Bewegung in ihrer Längsrichtung mit der Ventilspindel (13) verbunden ist, wobei die Verbindung zwischen der Ventilspindel (13) und der Betätigungsvorrichtung (9) in ihren Längsrichtungen starr ist, **dadurch gekennzeichnet, dass** die Mittel zum Absorbieren einer übermäßigen Bewegung bedingen, dass die Betätigungsvorrichtung (9) und die Ventilspindel (13) in eine Stellung bewegbar sind, die über die Stellung, die der geschlossenen Stellung des Ventils (3) entspricht, hinausgeht, wobei der Ventilkegel (15) an seiner geschlossenen Stellung vorbei bewegbar ist.

2. Thermostatisches Reglersystem (1) nach Anspruch 1, **dadurch gekennzeichnet, dass** das Gehäuse (4) zumindest teilweise aus einem Material mit geringer Wärmeleitfähigkeit hergestellt ist, um einer Wärmeleitung von dem Kühler auf den Sensorkörper (5) entgegenzuwirken.

3. Thermostatisches Reglersystem (1) nach Anspruch 1 oder 2, **dadurch gekennzeichnet, dass** das Gehäuse (4) teilweise aus einem Material mit stärkerer Wärmeleitfähigkeit zur Übertragung der Umgebungswärme auf den thermostatischen Sensorkörper (5) hergestellt ist.

4. Thermostatisches Reglersystem (1) nach einem der Ansprüche 1-3, **dadurch gekennzeichnet, dass** eine äußere Haube (6) des Gehäuses (4) aus mindestens zwei verschiedenen Materialien hergestellt ist.

## Revendications

1. Système de régulateur thermostatique (1) pour un radiateur, comprenant une soupape (3) comportant une tige de soupape (13) qui supporte un cône de soupape (15), un régulateur (2) comprenant un boîtier (4) et un corps de capteur thermostatique (5) comportant un dispositif d'actionnement (9) pouvant se déplacer en réaction à la température, et des moyens pour absorber un excédent de mouvement du dispositif d'actionnement (9) outre le mouvement jusqu'à la position fermée de la soupape (3), le dispositif d'actionnement (9) étant raccordé à la tige de soupape (13) afin de transférer un mouvement dans sa direction longitudinale, le raccordement entre la tige de soupape (13) et le dispositif d'actionnement (9) étant rigide dans leurs directions longitudinales, **caractérisé en ce que** lesdits moyens pour absorber un excédent de mouvement impliquent que le dispositif d'actionnement (9) et la tige de soupape (13) peuvent être déplacés jusqu'à une position se trouvant au-delà de la position qui correspond à la position fermée de la soupape (3), le cône de soupape (15) pouvant être déplacé au-delà de sa position fermée.

2. Système de régulateur thermostatique (1) selon la revendication 1, **caractérisé en ce que** le boîtier (4) est au moins partiellement fabriqué à partir d'un matériau présentant une faible conductivité thermique, de façon à neutraliser la conduction thermique du radiateur au corps de capteur (5).

3. Système de régulateur thermostatique (1) selon la revendication 1 ou 2, **caractérisé en ce que** le boîtier (4) est au moins partiellement fabriqué à partir d'un matériau présentant une conductivité thermique supérieure, destiné à conduire la chaleur ambiante au corps de capteur thermostatique (5).

4. Système de régulateur thermostatique (1) selon l'une quelconque des revendications 1 à 3, **caractérisé en ce qu'**un capot extérieur (6) du boîtier (4) est fabriqué à partir d'au moins deux matériaux différents.
